# EUROPÄISCHE PATENTSCHRIFT

(11) **EP 0 974 187 B1**
(45) Veröffentlichungstag und Bekanntmachung des Hinweises auf die Patenterteilung: **29.08.2001**
(21) Anmeldenummer: 98920510.9
(22) Anmeldetag: 09.04.1998
(51) Int. Cl.: H02M 3/158, H03K 3/57

(54) **IMPULSGENERATOR MIT HOHEM WIRKUNGSGRAD ZUR ERZEUGUNG VON KURZEN SPANNUNGSIMPULSEN**
HIGH EFFICIENCY PULSE GENERATOR FOR PRODUCING SHORT VOLTAGE PULSES
GENERATEUR D'IMPULSIONS A HAUT RENDEMENT POUR PRODUIRE DE BREVES IMPULSIONS DE TENSION

(30) Priorität: 10.04.1997 DE 19714980
(43) Veröffentlichungstag der Anmeldung: 26.01.2000
(73) Patentinhaber: ASM AUTOMATION, SENSORIK, MESSTECHNIK GMBH, D-82008 Unterhaching (DE)
(72) Erfinder: STEINICH, Klaus-Manfred, D-85604 Pöring (DE)
(74) Vertreter: Strych, Werner Maximilian Josef, Dr.
(86) Internationale Anmeldenummer: EP9802108
(87) Internationale Veröffentlichungsnummer: WO9845932

(56) Entgegenhaltungen:
- EP-A- 0 320 307
- EP-A- 0 478 436
- DE-A- 4 005 129
- FR-A- 2 538 942
- US-A- 3 974 439

## Beschreibung

Der Impulsgenerator zur Erregung von Stromimpulsen gehört zu einem Ultraschall-Positionssensor, bestehend aus einem Wellenleiter (41), in dem ein Ultraschallimpuls durch einen Stromimpuls erregt und übertragen wird, einem Ultraschall-Erregerstromkreis (4) in dem der Stromimpuls (27) durch einen elektrischen Spannungsimpuls (30) erregt wird, einem Magneten (40) dessen Magnetfeld in Verbindung mit dem Stromimpuls den Ultraschallimpuls auslöst und einem Detektor (36, 37, 38, 39) zum Empfang des Ultraschallimpulses an einem Ende des Welleneiters. Die Laufzeit des Ultraschallimpulses durch den Wellenleiter beginnend mit dem Erzeugen des Stromimpulses bis zum Empfang durch den Detektor ist ein Maß für die zu messende Magnetposition. Weiterhin kann der Impulsgenerator vorteilhaft zur Erzeugung von Spannungs- und Stromimpulsen an optoelektronischen Bauelementen oder piezoelektrischen Stellgliedern eingesetzt werden.

Die US 5,587,680 beschreibt einen Pulsgenerator mit Ladungspumpe, der durch Spannungsverdopplung mit geschalteten Kondensatoren eine Impuls-Ausgangsspannung erzeugt, die höher als die zugeführte Eingangsspannung ist. Die Kondensatoren werden parallel aus der geregelten Ladespannung einer Gleichspannungsquelle aufgeladen und zur Impulserzeugung in Reihe geschaltet. Nachteil der beschriebenen Verdopplerschaltung ist, daß um eine konstante, von den Schwankungen der Eingangsspannung unabhängige Ausgangsspannung zu erzielen die Eingangsspannung zunächst auf einen definierten Spannungswert heruntergeregelt werden muß. Dies geschieht durch lineare Regelung und verursacht Verlustleistung in der Gleichspannungsquelle Weiterhin ist ein Nachteil, daß die Spannung nur in ganzzahligen Vielfachen der geregelten Gleichspannung entsprechend der Anzahl der Kaskadenelemente erhöht werden kann.

Deshalb ist es die Aufgabe der vorliegenden Erfindung, einen Impulsgenerator zu beschreiben, dessen Ausgangsspannung in beliebigem Verhältnis zur Eingangsspannung festgelegt werden kann und dessen Ausgangsspannung auf einen vordefinierten Wert geregelt ist und Verlustleistung durch lineare Regelung vermieden wird.

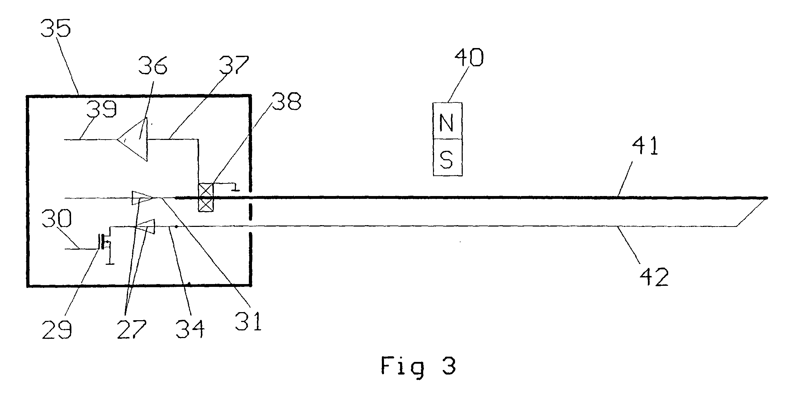

Der Impulsgenerator dient zur Erzeugung von elektrischen Spannungsimpulsen an einem Lastelement (4), vorzugsweise zur Erregung von Stromimpulsen im Stromimpuls-Erregerkreis (4) eines in Fig. 3 dargestellten bekannten Ultraschall-Positionssensors (35). Der Stromimpuls-Erregerkreis mit einem ersten (31) und zweiten (34) Anschluß besteht aus einem Stromleiter (42), der Stromimpulse (27) entlang des Wellenleiters und zurück führt. Der Wellenleiter (41) selbst kann Teil des Stromleiters (42) sein. Zusammenwirkend mit dem Magnetfeld eines Magneten (40) werden durch die Stromimpulse Ultraschallimpulse im Ultraschall-Wellenleiter (41) erzeugt. Die Ultraschallimpulse werden im Ultraschall-Wellenleiter weitergeleitet und an dessen Ende von einem Detektor, bestehend aus einer Spule (38) und einer Signalverarbeitungseinheit (36) ausgewertet. Die Signalverarbeitungseinheit empfängt ein von der Spule empfangenes elektrisches Signal (37) und erzeugt ein elektrisches Positionssignal (39) das sich in bekannter Weise durch Messung der Laufzeit des Ultraschallsignals von der Position des entlang des Wellenleiters (41) geführten Magneten (40) bis zum Detektor ergibt. Andere Anwendungen des Impulsgenerators, sowie andere Lastelemente, wie z.B. Lastimpedanzen, Halbleiterbauelemente, optische Komponenten oder piezoelektrische Stellglieder sind möglich

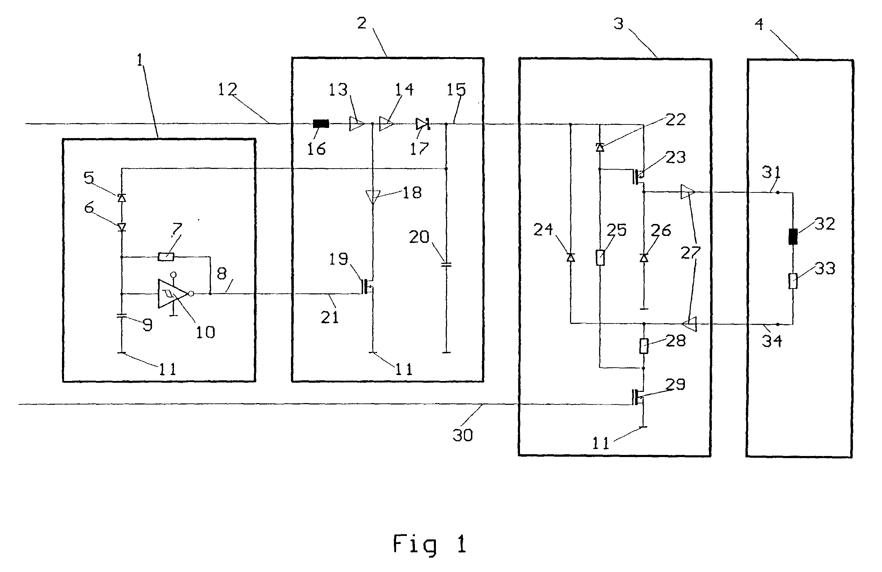

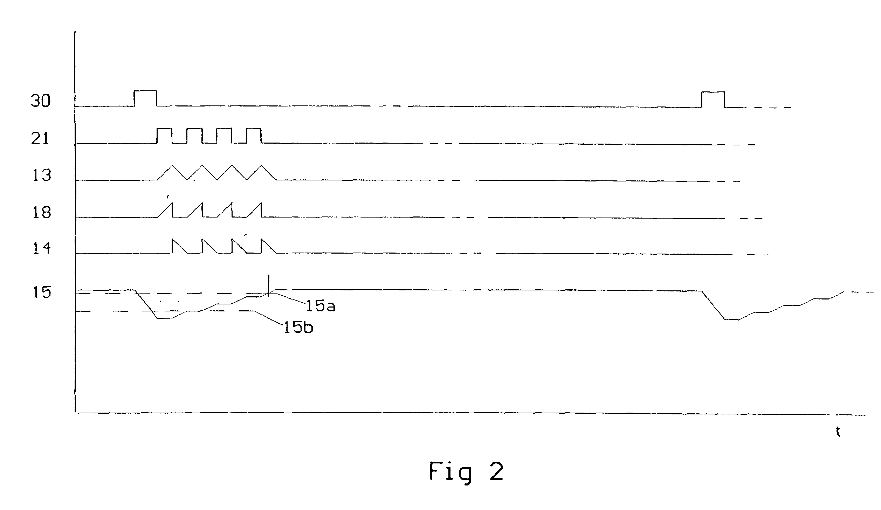

Ein Spannungs-Hochsetzer (2) in Fig. 1 nach den Ansprüchen 3 bis 8 besteht aus einer Induktivität (16), einem ersten Schalter (19), einem zweiten Schalter (17) und einem Speicherkondensator (20). Dem ersten Anschluß der Induktivität wird eine Eingangsspannung (12) zugeführt, der zweite Anschluß der Induktivität ist mit dem ersten Schaltanschluß des ersten Schalters und mit dem ersten Schaltanschluß des zweiten Schalters verbunden. Der zweite Schaltanschluß des zweiten Schalters (17) ist verbunden mit dem ersten Anschluß des Speicherkondensators (20), der zweite Anschluß des Speicherkondensators ist mit dem Bezugspotential (11) verbunden. Der zweite Schaltanschluß des ersten Schalters ist verbunden mit dem Bezugspotential. Wie im Impulsdiagramm Fig. 2 dargestellt erzeugt der erste Schalter (19), nach Anspruch 7 ein N-Kanal MOSFET oder Bipolar Transistor, etwa dreieckförmige Stromimpulse (13) in der Induktivität (16). Dabei fließt ein durch Selbstinduktion anwachsender Teil der Stromimpulse (18) durch den ersten Schalter. Der zweite Schalter, nach Anspruch 6 eine Diode, führt die in der Induktivität erzeugten Stromimpulse dem Speicherkondensator (20) zu. Dabei fließt ein durch Selbstinduktion abklingender Teil der Stromimpulse (14) durch den zweiten Schalter. Die Stromimpulse erzeugen eine am Speicherkondensator anliegende Ausgangsspannung (15), die größer oder gleich der zugeführten Eingangsspannung (12) ist.

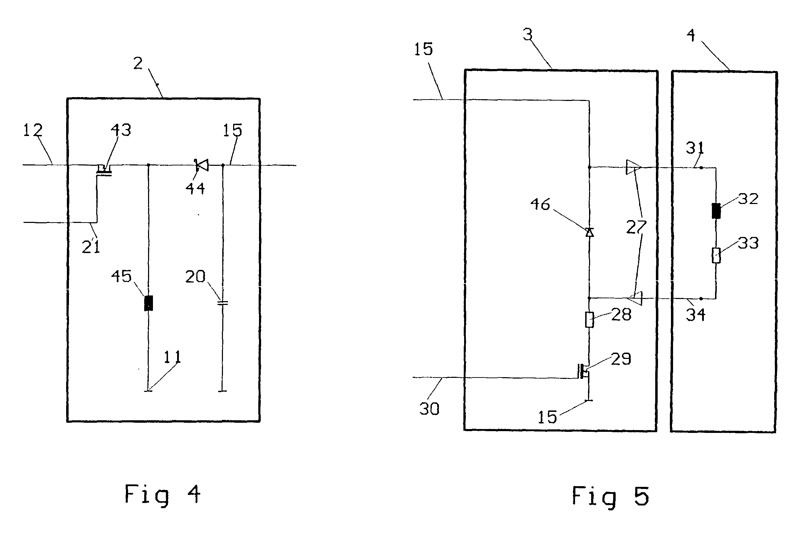

Eine alternative Ausführungsform eines Spannungs-Hochsetzer (2) in Fig. 4 nach Anspruch 20 besteht aus einer Induktivität (45), einem ersten Schalter (43), einem zweiten Schalter (44) und dem Speicherkondensator (20). Die Verschaltung der Bauelemente entspricht der vorgenannten Ausführungsform, jedoch sind die Plätze von Induktivität und erstem Schalter gegenüber der vorgenannten Ausführungsform vertauscht. Der erste Schalter ist vorzugsweise ein P-Kanal-MOSFET oder ein PNP-Bipolar-Transistor, der zweite Schalter ist vorzugsweise eine Diode (44) und gegenüber der vorgenannten Ausführungsform so gepolt, daß dem Speicherkondensator negative Stromimpulse zugeführt werden. Die Ausgangsspannung dieser Ausführungsform ist negativ und dem Betrag nach größer oder gleich der zugeführten Eingangsspannung.

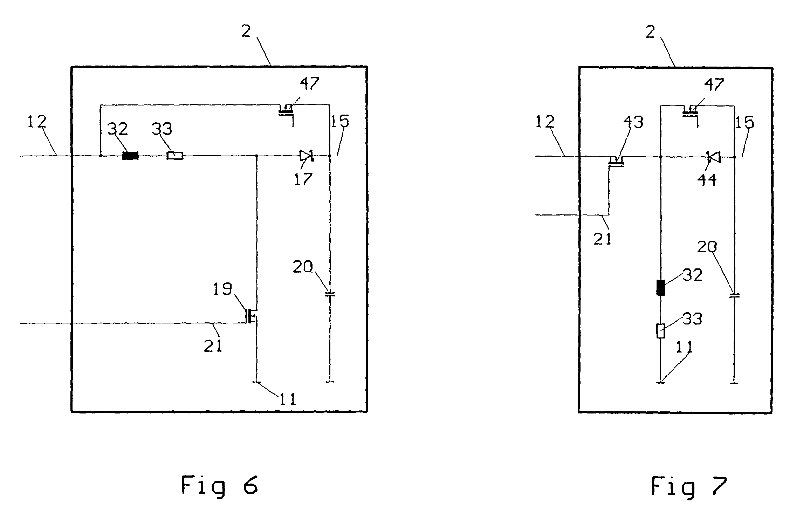

Zwei weitere alternative Ausführungsformen eines Spannungs-Hochsetzers in Fig. 6 und 7 nach den Ansprüchen 21 und 22 sehen vor, die Induktivität (32) des Stromimpuls-Erregerkreises eines Ultraschall Positionssensors gleichzeitig als Induktivität (16) des Spannungs-Hochsetzers zu nutzen. Die Ausführungsform nach Fig. 6 eines solchen Spannungs-Hochsetzers besteht aus einem Stromimpuls-Erregerkreis (32, 33), einem ersten Schalter (19), einem zweiten Schalter (17), einem Speicherkondensator (20) und einem ausgangsseitigen Schalter (47). Dem ersten Anschluß des Stromimpuls-Erregerkreises wird eine Eingangsspannung (12) zugeführt. Der zweite Anschluß des Stromimpuls-Erregerkreises ist verbunden mit dem ersten Schaltanschluß des ersten Schalters, vorzugsweise ein N-Kanal MOSFET oder NPN-Bipolar-Transistor und mit dem ersten Schaltanschluß des zweiten Schalters, vorzugsweise eine Schottkydiode. Der zweite Schaltanschluß des zweiten Schalters ist verbunden mit dem ersten Anschluß des Speicherkondensators, der zweite Anschluß des Speicherkondensators ist verbunden mit dem Bezugspotential (11). Der zweite Schaltanschluß des ersten Schalters ist verbunden mit dem Bezugspotential. Der ausgangsseitige Schalter ist zwischen den eingangsseitigen ersten Anschluß des Stromimpuls-Erregerkreises und den ersten Anschluß des Speicherkondensators geschaltet. Durch den ersten Schalter (19) des Spannungs-Hochsetzers (2) werden Stromimpulse im Stromimpuls-Erregerkreis (32, 33) erregt und über den zweiten Schalter (17), der vorzugsweise als Diode ausgeführt ist, dem Speicherkondensator (20) zugeführt. In einer Ausführungsform nach Fig. 6 wird nach Aufladen des Speicherkondensators auf einen vordefinierten Spannungswert der erste Schalter (19) geschlossen und mit einem ausgangsseitigen Schalter (47) die am Speicherkondensator anliegende Ausgangsspannung des Spannungs-Hochsetzers dem Stromimpuls-Erregerkreis zugeführt. In einer Ausführungsform nach Fig. 7 und Anspruch 22 wird nach Aufladen des Speicherkondensators auf einen vordefinierten Spannungswert der erste Schalter (19) geöffnet und mit einem weiteren Schalter (47) die am Speicherkondensator anliegencle Ausgangsspannung des Spannungs-Hochsetzers dem Stromimpuls-Erregerkreis zugeführt. Die Diode (17) dient in diesem Fall gleichzeitig als Freilaufdiode für die im Stromimpuls-Erregerkreis gespeicherte Induktionsenergie. Die Ausführungsformen nach Fig. 6 und Fig. 7 sind anwendbar wenn das Lastelement eine Induktivität ist. Wird die Ausführungsform eines Spannungs-Hochsetzers nach Fig. 7 zur Erregung von Stromimpulsen im Stromimpuls-Erregerkreis eines Ultraschall-Positionssensors genutzt ist besonders vorteilhaft, daß durch Umkehr der Richtung der Stromimpulse im Wellenleiter eine vollständige Ummagnetisierung des Wellenleitermaterials erfolgt und Hystereseeffekte der Positionsbestimmung ausgeglichen werden. Weitere alternative Ausführungsformen eines Spannungs-Hochsetzers sind möglich.

Einem Impulsregler (1) in Fig. 1. nach den Ansprüchen 9 bis 11 zur Regelung der Ausgangsspannung wird die Ausgangsspannung des Spannungs-Hochsetzers zugeführt, ein Steuersignal (21) wird vorn Impulsregler dem Steuereingang des ersten Schalters des Spannungshochsetzers zugeführt. Eine Ausführungsform des Impulsreglers besteht aus einer Zenerdiode (5), einer Diode (6), einem Schmitt-Trigger-Inverter (10) ausgeführt als Logikgatter 74HC14 in Einzel-Logikgatterausführung, einem Schwingkreiskondensator (9) und einem Widerstand (7). Die Kathode der Zenerdiode ist verbunden mit der Ausgangsspannung (15) des Spannungs-Hochsetzers (2) am ersten Anschluß des Speicherkondensator (20), die Anode der Zenerdiode ist mit der Anode der Diode (6) verbunden, die Kathode der Diode ist mit dem Eingang des Schmitt-Trigger-Inverters (10) verbunden, der erste Anschluß des Schwingkreiskondensators (9) ist mit dem Eingang des Schmitt-Trigger-Inverters verbunden, der zweite Anschluß des Schwingkreiskondensators ist mit dem Bezugspotential (11) verbunden, der erste Anschluß des Widerstandes ist mit dem Eingang des Schmitt-Trigger-Inverters verbunden, der zweite Anschluß des Widerstandes ist mit dem Ausgang des Schmitt-Trigger-Inverters verbunden, der Ausgang des Schmitt-Trigger-Inverters ist mit dem Steuereingang des ersten Schalters des Spannungshochsetzers verbunden. Der Schmitt-Trigger-Inverter wird mit einer geregelten Versorgungsspannung zwischen 1V und 15V versorgt. Der Impulsregler führt dem ersten Schalter des Spannungs-Hochsetzers ein Steuersignal (21) zu. Widerstand (7), Schwingkreiskondensator (9) und Schmitt-Trigger-Inverter (10) bilden einen steuerbaren Oszillator dessen Oszillation durch die über die Zenerdiode (5) und die Diode (6) zugeführte von der Ausgangsspannung abgeleitete Teilspannung beeinflußt wird. Unterschreitet die zu regelnde Ausgangsspannung (15) einen vordefinierten unteren Wert (15b), setzt die Oszillation ein, und der Ausgang (8) des Schmitt-Trigger-Inverters erzeugt Spannungsimpulse mit denen der erste Schalter (19) des Spannungshochsetzers ein- und ausgeschaltet wird und Stromimpulse erzeugt. Überschreitet die Ausgangsspannung einen vordefinierten oberen Wert (15a) kommt die Oszillation zum Erliegen, der Ausgang (8) des Schmitt-Trigger-Inverters und damit das Steuersignal (21) für den ersten Schalter (19) des Spannungs-Hochsetzers nimmt den Zustand logisch NULL ein, dieser bleibt ausgeschaltet und es werden keine Stromimpulse erzeugt. Der Ladevorgang des Speicherkondensators (20) kann auch bezüglich eines einzigen Schwellwertes gesteuert werden. Für den oben beschriebenen Fall wäre dann der obere Wert (15a) gleich dem unteren Wert (15b). Die vom Impulsregler erzeugten Spannungsimpulse schalten den ersten Schalter des Spannungshochsetzers für eine erste vordefinierte Zeitspanne ein und für eine zweite vordefinierte Zeitspanne aus. Die erste vordefinierte Zeitspanne bestimmt die Stromstärke der Stromimpulse (13) durch die Induktivität (16) Die erste vordefinierte Zeitspanne der vom Impulsregler erzeugten Spannungsimpulse ist von der Höhe der zugeführten Ausgangsspannung des Spannungs-Hochsetzers beeinflußt, da der Schaltpunkt des Schmitt-Trigger-Inverters durch die zugeführte Spannung verschoben wird. Dies erzielt vorteilhaft eine zusätzliche Regelung durch Pulsweitenmodulation im Bereich kleiner Abweichungen vom vordefinierten Sollwert (15a) der Ausgangsspannung. Durch Wahl der Zenerspannung der Zenerdiode (5) wird der Sollwert der zu regelnden Ausgangsspannung des Spannungs-Hochsetzers vorgegeben. Eine Kombination durch Reihenschaltung von mehreren Zenerdioden erlaubt Spannungs-Sollwerte vorzugeben die von Einzel-Zenerdioden nicht abgedeckt werden. Die Diode (6) verhindert, daß beim Einschalten der Betriebsspannung von Spannungs-Hochsetzer und Impulsregler die Zenerdiode fortwärts leitend wird und der Schmitt-Trigger-Inverter den ersten Schalter des Spannungs-Hochsetzers eingeschaltet hält. Andere Ausführungsformen eines Impulsreglers, die die zu regelnde Ausgangsspannung des Spannungs-Hochsetzers in Steuer-Spannungsimpulse zur Ansteuerung des ersten Schalters umsetzen, sind möglich.

Eine Ausführungsform in Fig. 1 eines ausgangsseitigen Schalters (3) nach den Ansprüchen 12 bis 15 besteht aus einem ersten Lastschalter (23), ausgeführt als P-Kanal MOSFET-Transistor oder PNP Bipolar-Transistor, einem zweiten Lastschalter (29), ausgeführt als N-Kanal MOSFET-Transistors oder NPN Bipolar-Transistor, einer ersten Diode zur Energierückführung (24), einer zweiten Diode zur Energierückführung (26), einer Zenerdiode (22) und einem Widerstand (25). Der erste Schaltanschluß des ersten Lastschalters ist mit der Ausgangsspannung (15) des Spannungs-Hochsetzers (2) verbunden, der zweite Schaltanschluß des ersten Lastschalters ist mit einem ersten Anschluß (31) des Ultraschall-Erregerstromkreises (4) verbunden, der ersatzweise als Induktivität (32) und Widerstand (33) dargestellt ist. Der erste Schaltanschluß des zweiten Lastschalters (29) ist mit dem zweiten Anschluß (34) des Ultraschall-Erregerstromkreises verbunden, der zweite Schaltanschluß des zweiten Lastschalters ist mit dem Bezugspotential verbunden. Die Kathode der ersten Diode (24) ist mit der Ausgangsspannung des Spannungs-Hochsetzers verbunden, die Anode der ersten Diode ist mit dem zweiten Anschluß des Ultraschall-Erregerstromkreises verbunden. Die Kathode der zweiten Diode (26) ist mit dem ersten Anschluß (31) des Ultraschall-Erregerstromkreises verbunden, die Anode der zweiten Diode ist mit dem gemeinsamen Bezugspotential verbunden. Die Kathode der Zenerdiode (22) ist mit der Ausgangsspannung des Spannungs-Hochsetzers verbunden, ihre Anode ist mit dem Gate-Anschluß des P-Kanal MOSFET-Transistors und über einen Widerstand mit dem Drain Anschluß des N-Kanal MOSFET-Transistors verbunden. Über Zenerdiode (22) und Widerstand (25) wird der P-Kanal MOSFET-Transistor durch das Einschalten des N-Kanal MOSFET-Transistors mit eingeschaltet, so daß zum Erzeugen eines Stromimpulses im Ultraschall-Erregerstromkreis beide Lastschalter gleichzeitig eingeschaltet sind und die am Speicherkondensator des Spannungshochsetzers anliegende Spannung dem Ultraschall-Erregerstromkreis zugeführt wird. Dem Gate-Anschluß des N-Kanal MOSFET-Transistors (29) wird ein Signal zur Erzeugung von Stromimpulsen (30) im Ultraschall-Erregerstromkreis zugeführt, das von einer hier nicht beschriebenen Steuereinheit erzeugt wird. Die Dioden (24, 26) führen nach dem Ausschalten der Schalter (23, 29) die Selbstinduktionsenergie aus dem Ultraschall-Erregerstromkreis als Stromimpuls in den Speicherkondensator (20) zurück.

Eine Ausführungsform in Fig. 5 eines ausgangsseitigen Schalters ohne Energierückführung (4) nach den Ansprüchen 16 bis 18 besteht aus einem Lastschalter (29) und einer Diode (46). Ein erster Anschluß (31) des Ultraschall-Erregerstromkreises (4) ist mit der Ausgangsspannung des Spannungs-Hochsetzers verbunden. Der erste Schaltanschluß des Lastschalters (29) ist mit dem zweiten Anschluß (34) des Ultraschall-Erregerstromkreises verbunden, ein zweiter Schaltanschluß des Lastschalters ist mit dem Bezugspotential (11) verbunden. Die Kathode der Diode (46) ist mit dem ersten Anschluß des Ultraschall-Erregerstromkreises verbunden, die Anode der Diode ist mit dem zweiten Anschluß des Ultraschall-Erregerstromkreises verbunden. Die Diode nimmt als Freilaufdiode die Selbstinduktionsenergie des Ultraschall-Erregerstromkreises unter Vermeidung hoher Spannungsimpulse beim Ausschalten auf.

Eine alternative Ausführungsform eines ausgangsseitigen Schalters nach Anspruch 19, sieht einen Widerstand (28) zur Begrenzung und zur Messung des im Ultraschall-Erregerstromkreis fließenden Stroms zwischen dem zweiten Anschluß des Ultraschall-Erregerstromkreises und dem zweiten Schalter vor

Die Vorteile der Erfindung beruhen darauf, daß eine Impuls-Ausgangsspannung erzeugt wird, die durch die Zenerspannung der Zenerdiode in beliebigem Verhältnis größer oder gleich der Eingangsspannung vorgegeben ist. Ein weiterer Vorteil ist, daß durch geschaltete Ladestromimpulse die bei linearer Regelung anfallende Verlustleistung vermieden wird. Die Nutzung von einer Standard-Logikschaltung wie 74HC14 in Einzel-Logikgatterausführung ermöglicht einen besonders kostengünstigen und platzsparenden Aufbau.

## Patentansprüche

1. Ultraschall-Positionssensor mit einem Impulsgenerator mit hohem Wirkungsgrad zur Erzeugung von kurzen Spannungsimpulsen, umfassend
- einen Spannungshochsetzer (2), der einen ersten Schalter (19; 43), einem zweiten Schalter (17), eine Induktivität (16; 45) und einen Speicherkondensator (20) aufweist, wobei der erste Schalter (19;43) Strompulse in der Induktivität (16; 45) erzeugt, die dem Speicherkondensator (20) zugeführt werden, wenn ein unterer Grenzwert (15b) einer Ausgangsspannung (15) unterschritten ist,
- einen Impulsregler (1), der den ersten Schalter (19) ansteuert, bis die Ausgangsspannung (15) einen oberen Grenzwert (15a) erreicht hat, der größer oder gleich dem unteren Grenzwert (15b) sein kann, wobei der Impulsregler (1) einen steuerbaren Impulserzeuger mit einem Schmitt-Trigger-Inverter (10), einen Schwingkreiskondensator (9) und einen Widerstand (7) umfaßt, dessen Ausgangsimpulse durch eine von der Ausgangsspannung (15) über eine Zenerdiode (5) abgeleitete Teilspannung beeinflußt werden, wobei die Zenerspannung den Arbeitsbereich des Impulserzeugers festlegt,
- einen Ultraschall-Erregerstromkreis (4), und
- einen ausgangsseitigen Schalter (3) mit einem Lastschalter (23, 29), der zur Erzeugung eines Spannungsimpulses in dem Ultraschall-Erregerstromkreis (4) eingeschaltet wird, wodurch die an dem Speicherkondensator (20) anliegende Spannung dem Ultraschall-Erregerstromkreis (4) so lange zugeführt wird, bis der untere Grenzwert (15b) der Ausgangsspannung (15) unterschritten ist.

2. Impulsgenerator nach Anspruch 1,
**dadurch gekennzeichnet**, daß
der Spannungs-Hochsetzer (2) einen zweiten Schalter (17) aufweist, der zwischen der Induktivität (16) und dem Speicherkondehsator (20) zwischengeschaltet ist.

3. Impulsgenerator nach Anspruch 2,
**dadurch gekennzeichnet, daß**
der zweite Schalter eine Diode ist.

4. Impulsgenerator nach Anspruch 1,
**dadurch gekennzeichnet, daß**
der erste Schalter (19) ein MOS- oder Bipolar-Transistor ist.

5. Impulsgenerator nach einem der vorhergehenden Ansprüche 1 bis 4,
**dadurch gekennzeichnet**, daß
ein erster Anschluß der Induktivität (16) an einer Eingangsspannung liegt, ein zweiter Anschluß der Induktivität (16) mit einem ersten Anschluß des ersten Schalters (19) und mit einem ersten Anschluß des zweiten Schalters (17) verbunden ist, der Steueranschluß des ersten Schalters (19) mit dem Ausgang des Impulsreglers (1), ein zweiter Anschluß des zweiten Schalters (17) mit einem ersten Anschluß des Speicherkondensators (20) verbunden ist, und ein zweiter Anschluß des Speicherkondensators (20) und ein zweiter Schaltanschluß des ersten Schalters mit dem Bezugspotential verbunden sind.

6. Impulsgenerator nach einem der Ansprüche 1 bis 5,
**dadurch gekennzeichnet, daß**
der Impulsregler (1) eine Zenerdiode (5), eine Diode (6), einen Schmitt-Trigger-Inverter (10), einen Schwingkreiskondensator (9) und einen Widerstand (7) aufweist, wobei die Kathode der Zenerdiode (5) mit der Ausgangsspannung (15) des Spannungs-Hochsetzers (2), die Anode der Zenerdiode (5) mit der Anode der Diode (6), die Kathode der Diode (6) mit dem Eingang des Schmitt-Trigger-Inverters (10), der erste Anschluß des Schwingkreiskondensators (9) mit dem Eingang des Schmitt-Trigger-Inverters (10), der zweite Anschluß des Schwingkreiskondensators (9) mit dem Bezugspotential (11), der erste Anschluß des Widerstands (7) mit dem Eingang des Schmitt-Trigger-Inverters (10), der zweite Anschluß des Widerstandes (7) mit dem Ausgang des Schmitt-Trigger-Inverters (10), und der Ausgang des Schmitt-Trigger-Inverters (10) mit dem Steuereingang des ersten Schalters (19) des Spannungs-Hochsetzers (2) verbunden ist, und der Schmitt-Trigger-Inverter (10) mit einer Versorgungsspannung zwischen 1V und 15V versorgt wird.

7. Impulsgenerator nach Anspruch 1,
**dadurch gekennzeichnet, daß**
ein ausgangsseitiger Schalter mit Ehergierückführung (3) mit einem ersten Lastschalter (23), einem zweiten Lastschalter (29), einer ersten Diode (24) und einer zweiten Diode (26) vorgesehen ist.

8. Impulsgenerator nach Anspruch 7,
**dadurch gekennzeichnet, daß**
ein erster Anschluß des ersten Lastschalters (23) mit der Ausgangsspannung (15) des Spannungs-Hochsetzers (2), ein zweiter Anschluß des ersten Lastschalters (23) mit einem ersten Anschluß eines Lastelementes (4), ein erster Anschluß des zweiten Lastschalters (29) mit einem zweiten Anschluß des Lastelementes(4), ein zweiter Anschluß des zweiten Lastschalters (29) mit dem Bezugspotential (11), die Kathode der ersten Diode (24) mit der Ausgangsspannung (15) des Spannungs-Hochsetzers (2) die Anode der ersten Diode (24) mit dem zweiten Anschluß des Lastelementes (4), die Kathode der zweiten Diode (26) mit dem ersten Anschluß des Lastelementes (4), und die Anode der zweiten Diode (26) mit dem gemeinsamen Bezugspotential (11), verbunden ist, und zum Erzeugen eines Stromimpulses im Lastelement (4) beide Lastschalter (23, 29) gleichzeitig ein- und ausgeschaltet werden.

9. Impulsgenerator nach Anspruch 8,
**dadurch gekennzeichnet, daß**
der erste Lastschalter (23) ein P-Kanal MOS-Transistor, und der zweite Lastschalter (29) ein N-Kanal MOS-Transistor ist, und eine Zenerdiode (22) vorgesehen ist, deren Kathode mit der Ausgangsspannung (15) und deren Anode mit dem Gate-Anschluß des P-Kanals MOS-Transistors und über einen Widerstand (25) mit dem Drain-Anschluß des N-Kanal MOS-Transistors verbunden ist.

10. Impulsgenerator nach Anspruch 8,
**dadurch gekennzeichnet, daß**
der erste Lastschalter (23) ein PNP-Bipolar-Transistor und der zweite Lastschalter (29) ein NPN-Bipolar-Transistor ist, und eine Zenerdiode (22) vorgesehen ist, deren Kathode mit der Ausgangsspannung (15) des Spannungs-Hochsetzers (2), und deren Anode mit dem Basis-Anschluß des PNP-Bipolar-Transistors und über einen Widerstand mit dem Kollektor-Anschluß des NPN-Bipolar-Transistors verbunden ist.

11. Impulsgenerator nach Anspruch 1,
**dadurch gekennzeichnet, daß**
ein ausgangsseitiger Schalter ohne Energierückführung (3), mit einem Lastschalter und einer Diode (46) vorgesehen ist.

12. Impulsgenerator nach Anspruch 11,
**dadurch gekennzeichnet, daß**
der erste Anschluß des Lastelementes (4) mit der Ausgangsspannung (15) des Spannungs-Hochsetzers (2), der erste Schaltanschluß des Lastschalters (29) mit dem zweiten Anschluß des Lastelementes (4), der zweite Schaltanschluß des Lastschalters (29) mit dem Bezugspotential (11), die Kathode der Diode (46) mit dem ersten Anschluß des Lastelementes (4), und die Anode der Diode (46) mit dem zweiten Anschluß des Lastelementes (4) verbunden ist.

13. Impulsgenerator nach Anspruch 1,
**dadurch gekennzeichnet, daß**
der erste und/oder zweite Lastschalter (23, 29) ein MOS- oder Bipolar-Transistor ist.

14. Impulsgenerator nach Anspruch 12,
**dadurch gekennzeichnet, daß**
zwischen dem zweiten Anschluß des Lastelementes (4) und dem zweiten Schalter (29) ein Widerstand (28) eingefügt ist.

15. Impulsgenerator nach Anspruch 1,
**dadurch gekennzeichnet, daß**
der erste Anschluß des ersten Schalters (43) mit der Eingangsspannung, der zweite Anschluß des ersten Schalters (43) mit dem ersten Anschluß der Induktivität (45) und der Kathode der Diode (44), der Steueranschluß des ersten Schalters (43) mit dem Ausgang des Impulsreglers (1), der zweite Anschluß der Induktivität (45) mit dem Bezugspotential (11), und die Anode der Diode (44) mit dem ersten Anschluß des Speicherkondensators (20) verbunden ist.

## Claims

1. An ultrasonic position sensor comprising a pulse generator of high efficiency for producing short voltage pulses, including
- a voltage booster (2) which has a first switch (19; 43), a second switch (17), an inductor (16; 45) and a storage capacitor (20), wherein the first switch (19; 43) produces current pulses in the inductor (16; 45), which are fed to the storage capacitor (20) when the voltage falls below a lower limit value (15b) of an output voltage (15),
- a pulse regulator (1) which actuates the first switch (19) until the output voltage (15) has reached an upper limit value (15a) which can be greater than or equal to the lower limit value (15b), wherein the pulse regulator (1) includes a controllable pulse producer with a Schmitt trigger inverter (10), an oscillating-circuit capacitor (9) and a resistor (7), the output pulses of which are influenced by a partial voltage derived from the output voltage (15) by way of a Zener diode (5), wherein the Zener voltage establishes the working range of the pulse producer,
- an ultrasonic exciter circuit (4), and
- a switch (3) on the output side, with a load switch (23, 29) which is switched on to produce a voltage pulse in the ultrasonic exciter circuit (4), whereby the voltage at the storage capacitor (20) is fed to the ultrasonic exciter circuit (4) until the output voltage (15) falls below the lower limit value (15b).

2. A pulse generator according to claim 1 **characterised in that** the voltage booster (2) has a second switch (17) which is connected between the inductor (16) and the storage capacitor (20).

3. A pulse generator according to claim 2 **characterised in that** the second switch is a diode.

4. A pulse generator according to claim 1 **characterised in that** the first switch (19) is an MOS or bipolar transistor.

5. A pulse generator according to one of preceding claims 1 to 4 **characterised in that** a first terminal of the inductor (16) is connected to an input voltage, a second terminal of the inductor (16) is connected to a first terminal of the first switch (19) and a first terminal of the second switch (17), the control terminal of the first switch (19) is connected to the output of the pulse regulator (1), a second terminal of the second switch (17) is connected to a first terminal of the storage capacitor (20), and a second terminal of the storage capacitor (20) and a second switching terminal of the first switch are connected to the reference potential.

6. A pulse generator according to one of claims 1 to 5 **characterised in that** the pulse regulator (1) comprises a Zener diode (5), a diode (6), a Schmitt trigger inverter (10), an oscillating-circuit capacitor (9) and a resistor (7), wherein the cathode of the Zener diode (5) is connected to the output voltage (15) of the voltage booster (2), the anode of the Zener diode (5) is connected to the anode of the diode (6), the cathode of the diode (6) is connected to the input of the Schmitt trigger inverter (10), the first terminal of the oscillating-circuit capacitor (9) is connected to the input of the Schmitt trigger inverter (10), the second terminal of the oscillating-circuit capacitor (9) is connected to the reference potential (11), the first terminal of the resistor (7) is connected to the input of the Schmitt trigger inverter (10), the second terminal of the resistor (7) is connected to the output of the Schmitt trigger inverter (10), the output of the Schmitt trigger inverter (10) is connected to the control input of the first switch (19) of the voltage booster (2), and the Schmitt trigger inverter (10) is supplied with a supply voltage of between 1 V and 15 V.

7. A pulse generator according to claim 1 **characterised in that** there is provided a switch on the output side, with energy recovery (3), having a first load switch (23), a second load switch (29), a first diode (24) and a second diode (26).

8. A pulse generator according to claim 7 **characterised in that** a first terminal of the first load switch (23) is connected to the output voltage (15) of the voltage booster (2), a second terminal of the first load switch (23) is connected to a first terminal of a load element (4), a first terminal of the second load switch (29) is connected to a second terminal of the load element (4), a second terminal of the second load switch (29) is connected to the reference potential (11), the cathode of the first diode (24) is connected to the output voltage (15) of the voltage booster (2), the anode of the first diode (24) is connected to the second terminal of the load element (4), the cathode of the second diode (26) is connected to the first terminal of the load element (4), and the anode of the second diode (26) is connected to the common reference potential (11), and to produce a current pulse in the load element (4) both load switches (23, 29) are simultaneously switched on and off.

9. A pulse generator according to claim 8 **characterised in that** the first load switch (23) is a P-channel MOS-transistor and the second load switch (29) is an N-channel MOS-transistor, and there is provided a Zener diode (22) whose cathode is connected to the output voltage (15) and whose anode is connected to the gate terminal of the P-channel MOS-transistor and by way of a resistor (25) to the drain terminal of the N-channel MOS-transistor.

10. A pulse generator according to claim 8 **characterised in that** the first load switch (23) is a PNP-bipolar transistor and the second load switch (29) is an NPN-bipolar transistor, and there is provided a Zener diode (22) whose cathode is connected to the output voltage (15) of the voltage booster (2) and whose anode is connected to the base terminal of the PNP-bipolar transistor and by Way of a resistor to the collector terminal of the NPN-bipolar transistor.

11. A pulse generator according to claim 1 **characterised in that** there is provided a switch on the output side, without energy recovery (3), having a load switch and a diode (46).

12. A pulse generator according to claim 11 **characterised in that** the first terminal of the load element (4) is connected to the output voltage (15) of the voltage booster (2), the first switching terminal of the load switch (29) is connected to the second terminal of the load element (4), the second switching terminal of the load switch (29) is connected to the reference potential (11), the cathode of the diode (46) is connected to the first terminal of the load element (4), and the anode of the diode (46) is connected to the second terminal of the load element (4).

13. A pulse generator according to claim 1 **characterised in that** the first and/or second load switches (23, 29) are an MOS or bipolar transistor.

14. A pulse generator according to claim 12 **characterised in that** a resistor (28) is inserted between the second terminal of the load element (4) and the second switch (29).

15. A pulse generator according to claim 1 **characterised in that** the first terminal of the first switch (43) is connected to the input voltage, the second terminal of the first switch (43) is connected to the first terminal of the inductor (45) and the cathode of the diode (44), the control terminal of the first switch (43) is connected to the output of the pulse regulator (1), the second terminal of the inductor (45) is connected to the reference potential (11) and the anode of the diode (44) is connected to the first terminal of the storage capacitor (20).

## Revendications

1. Capteur de position à ultrasons avec un générateur d'impulsions de rendement élevé pour la génération d'impulsions courtes de tension, comprenant :
- un amplificateur de tension (2), qui présente un premier interrupteur (19; 43), un second interrupteur (17), une inductance (16; 45) et un condensateur d'accumulation (20), le première interrupteur (19; 43) générant des impulsions de courant dans l'inductance (16; 45) qui sont envoyées au condensateur d'accumulation (20) si une valeur limite inférieure (15b) d'une tension de sortie (15) n'est pas atteinte,
- un régulateur d'impulsions (1), qui commande le premier interrupteur (19) jusqu'à ce que la tension de sortie (15) aie atteint une valeur limite supérieure (15a) qui peut être égale ou supérieure à la valeur limite inférieure (15b), le régulateur d'impulsions (1) comprenant un générateur d'impulsions commandable avec un inverseur trigger de Schmitt (10), un condensateur de circuit oscillant (9) et une résistance (7), dont les impulsions de sortie sont influencées par une tension partielle dérivée de la tension de sortie (15) par l'intermédiaire d'une diode de Zener (5), la tension de Zener déterminant la plage de travail du générateur d'impulsions,
- un circuit excitateur de courant à ultrasons (4), et
- un interrupteur côté sortie (3) avec un interrupteur de coupure en charge (23, 29) qui intervient pour la génération d'une impulsion de tension dans le circuit excitateur de courant à ultrasons (4), la tension se trouvant sur le condensateur d'accumulation (20) étant envoyée au circuit excitateur de courant à ultrasons (4) jusqu'à ce que la valeur limite inférieure (15b) de la tension de sortie (15) n'est pas été atteinte.

2. Générateur d'impulsions selon la revendication 1, **caractérisé en ce que** l'amplificateur de tension (2) présente un second interrupteur (17) qui est monté entre l'inductance (16) et le condensateur d'accumulation (20).

3. Générateur d'impulsions selon la revendication 2, **caractérisé en ce que** le second interrupteur est une diode.

4. Générateur d'impulsions selon la revendication 1, **caractérisé en ce que** le premier interrupteur (19) est un transistor MOS ou bipolaire.

5. Générateur d'impulsions selon l'une des revendications précédentes 1 à 4, **caractérisé en ce qu**'une première connexion de l'inductance (16) se trouve sur une tension de sortie, une seconde connexion de l'inductance (16) est reliée avec une première connexion du premier interrupteur (19) et avec une première connexion du second interrupteur (17), la connexion de commande du premier interrupteur (19) est reliée à la sortie du régulateur d'impulsions (1), une seconde connexion du second interrupteur (17) est reliée à une première connexion du condensateur d'accumulation (20) et une seconde connexion du condensateur d'accumulation (20 et une seconde connexion de couplage du premier interrupteur sont reliées au potentiel de référence.

6. Générateur d'impulsions selon l'une des revendications 1 à 5,
**caractérisé en ce que** le régulateur d'impulsions (1) présente une diode Zener (5), une diode (6), un inverseur trigger de Schmitt (10), un condensateur de circuit oscillant (9), et une résistance (7), la cathode de la diode Zener (5) étant reliée à la tension de sortie (15) de l'amplificateur de tension (2), l'anode de la diode Zener (5) à l'anode de la diode (6), la cathode de la diode (6) à l'entrée de l'inverseur trigger de Schmitt (10), la première connexion du condensateur de circuit oscillant (9) avec l'entrée de l'inverseur trigger de Schmitt (10), la seconde connexion du condensateur d'accumulation (9) avec le potentiel de référence (11), la première connexion de la résistance (7) avec l'entrée de l'inverseur trigger de Schmitt (10), et la seconde connexion de la résistance (7) avec la sortie de l'inverseur trigger de Schmitt (10) et la sortie de l'inverseur trigger de Schmitt (10) avec l'entrée de commande du premier interrupteur (19) de l'amplificateur de tension (2) et l'inverseur trigger de Schmitt (10) étant alimenté avec une tension comprise entre 1 V et 15 V.

7. Générateur d'impulsions selon la revendication 1, **caractérisé en ce qu**'un interrupteur côté sortie avec un retour d'énergie (3) est prévu avec un premier interrupteur de coupure en charge (23), un second interrupteur de coupure en charge (29), une première diode (24) et une seconde diode (26).

8. Générateur d'impulsions selon la revendication 7, **caractérisé en ce qu**'une première connexion du premier interrupteur de coupure en charge (23) est reliée à la tension de sorte (15) de l'amplificateur de tension (2), une seconde connexion du premier interrupteur de coupure en charge (23) est reliée à une première connexion d'un élément de coupure en charge (4), une première connexion du second interrupteur de coupure en charge (29) est reliée à une seconde connexion de l'élément de coupure en charge (4), une seconde connexion du second interrupteur de coupure en charge (29) est relié au potentiel de référence (11), la cathode de la première diode (24) est reliée à la tension de sortie (15) de l'amplificateur de tension (2), l'anode de la première diode (24) est reliée avec la seconde connexion de l'élément de coupure en charge (4), la cathode de la seconde diode (26) est reliée à la première connexion de l'élément de coupure en charge (4) et l'anode de la seconde diode (26) est reliée au potentiel commun de référence (11), et en ce que pour la génération d'une impulsion de courant dans l'élément de coupure en charge (4), les deux interrupteurs de coupure en charge (23, 29) sont connectés et déconnectés en même temps.

9. Générateur d'impulsions selon la revendication 8, **caractérisé en ce que** le premier interrupteur de coupure en charge (23) est un transistor MOS de canal P et le second interrupteur de coupure en charge (29) est un transistor MOS de canal N et en ce qu'une diode de Zener (22) est prévue dont la cathode est reliée à la tension de sortie (15) et dont l'anode est reliée à la connexion de grille du transistor MOS de canal P et est reliée par une résistance (25) à la connexion de drain du transistor MOS de canal N.

10. Générateur d'impulsions selon la revendication 8, **caractérisé en ce que** le premier interrupteur de coupure en charge (23) est un transistor bipolaire PNP et le second interrupteur de coupure en charge (29) est un transistor bipolaire NPN et en ce qu'il est prévu une diode Zener (22) dont la cathode est reliée à la tension de sortie (15) de l'amplificateur de tension (2) et dont l'anode est reliée à la connexion de base du transistor bipolaire PNP et est reliée par une résistance à la connexion de connecteur du transistor bipolaire NPN.

11. Générateur d'impulsions selon la revendication 1, **caractérisé en ce qu**'un interrupteur côté sortie sans retour d'énergie (3) est prévu avec un interrupteur de coupure en charge et une diode (46).

12. Générateur d'impulsions selon la revendication 11, **caractérisé en ce que** la première connexion de l'élément de coupure en charge (4) est reliée à la tension de sortie (15) de l'amplificateur de tension (2, la première connexion de couplage de l'interrupteur de coupure en charge (29) est reliée à la seconde connexion de l'élément de coupure en charge (4), la seconde connexion de couplage de l'interrupteur de coupure en charge (29) est reliée au potentiel de référence (11), la cathode de la diode (46) est reliée à la première connexion de l'élément de coupure en charge (4) et l'anode de la diode (46) est reliée à la seconde connexion de l'élément de coupure en charge (4).

13. Générateur d'impulsions selon la revendication 1, **caractérisé en ce que** le premier et/ou second interrupteurs de coupure en charge (23, 29) sont un transistor bipolaire ou MOS.

14. Générateur d'impulsions selon la revendication 12, **caractérisé en ce qu**'une résistance (28) est insérée entre la seconde connexion de l'élément de coupure en charge (4) et le second interrupteur (29).

15. Générateur d'impulsions selon la revendication 1, **caractérisé en ce que** la première connexion du premier interrupteur (43) est reliée à la tension d'entrée, la seconde connexion du premier interrupteur (43) est reliée à la première connexion de l'inductance (45) et avec la cathode de la diode (44), la connexion de commande du premier interrupteur (43) est reliée à la sortie du régulateur d'impulsions (1), la seconde connexion de l'inductance (45) avec le potentiel de référence (11), et l'anode de la diode (44) est reliée à la première connexion du condensateur d'accumulation (20) .
